(19) Europäisches Patentamt
European Patent Office
Office européen des brevets

(11) Publication number: **0 060 034**
**B1**

(12) # EUROPEAN PATENT SPECIFICATION

(45) Date of publication of patent specification: **04.07.84**

(51) Int. Cl.$^3$: **C 09 K 3/10, C 08 L 9/06**

(21) Application number: **82300712.5**

(22) Date of filing: **12.02.82**

(54) **Sealing compound for can ends.**

(30) Priority: **13.02.81 JP 18966/81**
**10.03.81 JP 33137/81**

(43) Date of publication of application:
**15.09.82 Bulletin 82/37**

(45) Publication of the grant of the patent:
**04.07.84 Bulletin 84/27**

(84) Designated Contracting States:
**DE FR IT NL**

(56) References cited:
**FR - A - 2 343 795**

**G.G. HAWLEY "THE CONDENSED CHEMICAL DICTIONARY", 10th edition, 1981, NEW YORK (US), VAN NOSTRAND REINHOLD COMPANY, pages 501-602**

**D.G. BLACKLEY "HIGH POLYMER LATICES", volume 1, 1966, MAC LAREN & SONS LTD., LONDON (GB), pages 210-217, 260-261, 316-327**

(73) Proprietor: **TOYO SEIKAN KAISHA LIMITED**
**3-1, Uchisaiwai-cho 1-chome Chiyoda-ku**
**Tokyo (JP)**

(72) Inventor: **Kumasaka, Hideo**
**11-3-403 Green Height 568 Tsukui**
**Yokosuka-shi Kanagawa-ken (JP)**
Inventor: **Tanimura, Yusaburo**
**1530, Suenaga Takatsu-ku**
**Kawasaki-shi Kanagawa-ken (JP)**
Inventor: **Fujisawa, Kazuo**
**3051-69, Nogawa Takatsu-ku**
**Kawasaki-shi Kanagawa-ken (JP)**

(74) Representative: **Woodcraft, David Charles et al,**
**BROOKES & MARTIN High Holborn House 52/54**
**High Holborn**
**London, WC1V 6SE (GB)**

**D.C. BLACKLEY "HIGH POLYMER LATICES", volume 2, 1966, MACLAREN & SONS LTD., LONDON (GB), page 832**

**H. BARRON "MODERN SYNTHETIC RUBBERS", 3rd edition, 1949, CHAPMAN & HALL, LONDON (GB), pages 350-351, 354-357, 360-363**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 060 034 B1

## Description

### Technical Field

The present invention relates to a sealing compound excellent in the adaptability to the lining operation. More particularly, the present invention relates to an improvement in a sealing compound comprising as the main ingredient an aqueous latex of a styrene-butadiene rubber. Furthermore, the present invention relates to a sealing compound for cans, which can effectively prevent rusting on the metal-exposed surface of the cut edge of a can end member.

### Background Art

In the conventional process for the manufacture of cans, as shown in Fig. 1, a liquid sealing composition called "sealing compound" is lined in an annular groove 2 of a can end member (can lid) 1, and a sealing compound layer (gasket) 3 is thus formed, if necessary, by drying. Then, the can end member 1 is double-seamed to a flange of a can body 5, as shown in Fig. 2, to form a can. This sealing compound comprises as the main ingredient an aqueous latex of a styrene-butadiene rubber (SBR), and a composition formed by adding a tackifier, a filler, an emulsifier or a dispersant, a thickening agent and the like to this aqueous latex is ordinarily used for the manufacture of cans.

This sealing compound comprises as the main ingredient an aqueous latex of a styrene-butadiene rubber (SBR) which contains styrene-butadiene rubber particles ordinarily having a number average particle size of from 1200 to 1500 Å (120—150 nm). When this known sealing compound is lined on a can lid at a relatively low speed, for example, of 20 to 150 strokes per minute, satisfactory results are generally obtained. However, it has been found that when the lining operation is carried out at a relatively high speed, for example, of 180 to 400 strokes per minute, problems arise in connection with the adaptability of this known sealing compound to the lining operation and the sealing performance and other qualities of the formed gasket.

More specifically, the above-mentioned latex-based sealing compound is lined in a groove formed on a can lid through an openable and closable nozzle, and the sealing compound undergoes a mechanical friction by sliding or the like repeatedly between a needle for opening and closing this nozzle and a leakage-preventing packing arranged along this needle. This mechanical friction is increased as the lining stroke number per minute is increased, and with increase of this mechanical friction, the temperature of the sealing compound is elevated.

In the above-mentioned conventional sealing compound, at the time of the high speed lining operation, agglomerates of the rubber particles are formed and coagulated by the mechanical friction and/or the elevation of the temperature, and simultaneously, the viscosity of the sealing compound is increased, as the result of that long-time continuous lining operation becomes impossible and the adaptability to the lining operation is degraded. Furthermore, the sealing performance of the formed gasket becomes insufficient and other qualities and properties of the gasket are degraded.

Moreover, it has been found that when this known aqueous sealing compound is used, rusting often takes place on the cut edge 4 of the can end member 1. Since a surface-treated steel plate such as a tin-plated steel plate (tinplate) or a chromic acid electrolytically treated steel plate (tin-free steel plate) is used as the can end member, occurrence of rusting on the surface to which the sealing compound is directly applied is prevented because of the presence of the covering layer, but in the above-mentioned cut edge 4, the steel substrate is exposed and the aqueous sealing compound adheres to this steel-exposed portion to cause rusting. If rusting takes place on the cut edge 4 of the can end member 1, when the can end member 1 is double-seamed to a can body filled with the content, rusts are separated and incorporated into the content to degrade the flavor and taste of the content, and furthermore, filliform corrosions are formed on the double-seamed portion to impair the appearance of the can.

### Disclosure of the Invention

We found that when an aqueous latex of styrenebutadiene rubber particles having a number average particle size of from 1600 to 3000 Å (160—300 nm) is selected and used as the aqueous latex for the sealing compound, formation of agglomerates and abnormal increase of the viscosity by the above-mentioned mechanical friction or temperature elevation at the high speed lining operation can be effectively controlled and the adaptability to the lining operation can be prominently improved, and the abovementioned defects can be eliminated effectively.

As the result of our researches made on the causes of rusting on the cut edge of the can end member, we also found that an electrolyte, such as sodium chloride, which is incorporated into an aqueous latex of a styrene-butadiene rubber used as the base component of the aqueous sealing compound so as to adjust the particle size of the rubber particles, causes the above-mentioned rusting and when an alkali metal carbonate or an alkali metal salt of a phosphorus oxyacid is used as such electrolyte, occurrence of rusting on the cut edge of the can end member can be prevented effectively.

We have now completed the present invention based on these findings.

More specifically, in accordance with one fundamental aspect of the present invention, there is provided a sealing compound for can ends excellent in the adaptability to the lining operation, which comprises an aqueous latex of a styrene-butadiene rubber, a tackifier and a filler, wherein said latex contains sytrene-butadiene rubber particles having a number average particle size of from 1600 to 3000 Å (160—300 nm), which are stabilized by an emulsifier or a dispersant.

In accordance with another apsect of the present invention, there is provided a sealing compound for cans, as set forth above, wherein said aqueous latex of the styrene-butadiene rubber further comprises as a particle size-adjusting agent an alkali metal carbonate or an alkali metal salt of a phosphorus oxyacid in an amount of 0.3 to 2.0 parts by weight, per 100 parts by weight of solids of the styrene-butadiene rubber.

Incidentally, by the term "number average particle size" used in the instant specification and appended claims is meant a mean value of particle sizes determined according to the electron micrography method.

Brief Description of the Drawings

Fig. 1 is a sectional view showing the state of application of a sealing compound to a groove of a can end member.

Fig. 2 is a sectional view showing a double-seamed portion of a can end member and a can body.

Fig. 3 is a graph illustrating the relation between the number average particle size of SBR particles and the weight of coagulated agglomerates.

Fig. 4 is a graph illustrating the relation between the liquid temperature of a composition comprising an SBR latex and the Brookfield viscosity of the composition.

Best Mode for Carrying out the Invention

In the present invention, as the styrene-butadiene rubber (hereinafter referred to as "SBR") latex, there is used a latex of SBR particles having a number average particle size of from 1600 to 3000 Å (160—300 nm), especially from 1800 to 2800 Å (180—280 nm). This condition is critical for obtaining a sealing compound having a good adaptability to the lining operation, which will readily be understood from Figs. 3 and 4 of the accompanying drawings. Fig. 3 shows the relation between the number average particle size (Å) of SBR particles and the weight of coagulated agglomerates, which is observed when an SBR latex-based sealing compound is subjected to the JIS mechanical stability test. From Fig. 3, it will readily be understood that if a latex having a number average particle size within the above-mentioned range is selected and used, formation of agglomerates can prominently be controlled as compared with the conventional sealing compounds A and B. Fig. 4 shows the relation between the liquid temperature and the Brookfield viscosity (rotor #4 rotated at 20 rpm, unit: cp (mPas)) of the above-mentioned SBR latex-based sealing compound. It is considered that a viscosity of 3000 to 6000 cp (mPas) is suitable for the adaptability of a sealing compound to the high speed lining operation. From Fig. 4, it is seen that in the conventional sealing compounds A and B, the range of the temperatures giving an appropriate viscosity is considerably narrow, whereas when an SBR latex has a number average particle size within the range specified in the present invention, the applicable temperature range can be broadened remarkably and the adaptability to the lining operation can be remarkably improved.

The effects of improving the mechanical stability and temperature stability of the sealing compound by adjusting the SBR particle size within the abovementioned range according to the present invention, are irrelevant to the mechanical stability and temperature stability of the SBR latex per se. And these effects are attained for the first time when a sealing compound is formed by incorporating a tackifier, a filler, a thickener and an emulsifier or dispersant into the SBR latex. When the particle size is changed in the SBR latex and it is subjected to the JIS mechanical stability test, it is seen that agglomerates are hardly formed if the number average particle size is in the range of from 1200 to 3000 Å (120—300 nm). When the temperature dependency of the Brookfield viscosity of the SBR latex per se examined, it is seen that there is no substantial temperature dependency of the Brookfield viscosity, or there is rather observed a negative temperature dependency. From the foregoing facts, it will be readily understood that the tendency of reduction of the mechanical stability or temperature stability of latex rubber particles at the high speed lining operation is observed for the first time when they are formed into a sealing compound by incorporation of a tackifier, a filler, a thickener and an emulsifier or dispersant, and it will be understood that according to the present invention, by increasing the particle size of SBR latex particles beyond the customarily adopted particle size, the abovementioned problems inherently involved in sealing compounds for the lining operation can be solved.

In the present invention, any of SBR latices prepared according to known methods can optionally be used, so far as the number average particle size of latex particles is within the above-mentioned range. An SBR latex is ordinarily obtained by emulsion-polymerizing styrene and butadiene in an aqueous medium in the presence of an emulsifier or a dispersant. Two kinds of SBR latices, that is, a cold rubber (obtained at a polymerization temperature lower than about 10°C) and a hot rubber (obtained at a polymerization temperature of 35 to 70°C), are obtained according to the polymerization temperature. Either the cold rubber or the hot rubber can be used in the present invention. However, since a relatively large amount of a polymerization inhibitor is contained in the cold rubber, if the cold rubber is used, the polymerization inhibitor is included in the sealing compound and is apt to have bad influences on the flavor of the content packed in a can. Accordingly, in the present invention, it is preferred that a hot rubber obtained by carrying out emulsion polymerization at 35 to 70°C should be used as the SBR latex.

In order to impart an optimal combination of the elastic and plastic properties to the SBR-based sealing compound, it is preferred that in forming SBR, styrene and butadiene should be copolymerized at a weight ratio of from 28/72 to 55/45, especially from 35/65 to 55/45.

For adjustment of the number average particle size of SBR particles within the above-mentioned range, there can be adopted the following methods, though applicable methods are not limited to those described below.

Method I:

In the emulsion polymerization, the amounts charged of the emulsifier or dispersant and water are reduced, and also the amount of the polymerization initiator is reduced and the polymerization rate is lowered.

Method II:

A small amount of ammonium chloride-ammonia is added to the latex to form an ammonia soap, and the particle size is coarsened at the heating condensation step.

Method III:

A solution of an electrolyte such as sodium chloride is added to the latex while keeping the amount of the soap and the pH value constant in the latex, or the amount of the soap is reduced, thereby to form an unstable latex, and then, the latex is cooled and frozen at a temperature lower than 0°C in a short time and is then thawed.

Examples of the latex recipe that can be adopted in the foregoing methods are described on page 198 of "Handbook of Synthetic Rubbers" published on November 30, 1967, and the incorporation ratios of the respective additives and the operation conditions are adjusted so that the number average particle size is included in the above-mentioned range.

It is ordinarily preferred that the latex that is used in the present invention should have a solid content of 40 to 70% by weight and a pH value of 9.5 to 10.5.

In addition to the above-mentioned SBR latex, the sealing compound of the present invention comprises as indispensable ingredients a tickifier for improving the adhesion to a coating or metal substrate and thus improving the sealing performance and a filler for imparting good compressive elasticity to the sealing compound and improving the drying property.

As preferred examples of the tackifier, there can be mentioned rosin type resins such as rosin, hydrogenated rosin, rosin esters, hydrogenated rosin esters and hardened rosin; terpene resins; phenolformaldehyde resins; phenolic resins modified with a natural resin such as rosin or terpene; xylene-formaldehyde resins; modified resins thereof and petroleum resins. The tackifier is used in an amount of 5 to 200 parts by weight, especially 20 to 140 parts by weight, per 100 parts by weight of solids of the SBR latex.

As preferred examples of the filler, there can be mentioned siliceous fillers such as colloidal silica, silicic anhydride, hydrous silicic acid and synthetic silicates, light calcium carbonate, heavy calcium carbonate, activated calcium carbonate, kaolin, calcined clay, alumina white, talc powder, dolomite, aluminul sulfate; barium sulfate, magnesium carbonate; magnesium silicate, magnesium oxide, calcium sulfate, pumice powder, glass powder, asbestos powder, zinc oxide; titanium dioxide and carbon black. The filler is used in an amount of 30 to 200 parts by weight, especially 50 to 150 parts by weight, per 100 parts by weight of solids of the SBR latex.

The sealing compound of the present invention further comprises an emulsifier or dispersant inherently contained in the SBR latex or independently added. As preferred examples of the emulsifier or dispersant, there can be mentioned fatty acids such as oleic acid, stearic acid, palmitic acid, lauric acid and myristic acid; resin acids such as rosin acid; organic sulfonic acids such as alkylaryl sulfonic acids, sulfonic acids of dibasic fatty acids esters and sulfonic acids of aliphatic amides; and sodium, potassium and ammonium salts of these acids. The emulsifier or dispersant is present in an amount of 3.5 to 9.5 parts by weight, especially 4 to 6 parts by weight, per 100 parts by weight of solids of the SBR latex. Since only a relatively small amount of the emulsifier or dispersant is contained in the SBR latex having a relatively large particle size, which is used in the present invention, it is ordinarily preferred that an additional amount of the emulsifier or dispersant is simultaneously incorporated when the tackifier and filler are added to the SBR latex.

Since the viscosity of the sealing compound of the present invention is generally low, from the viewpoint of the adaptability to the lining operation, it is preferred that a thickener composed of a water-soluble polymer is incorporated into the sealing compound of the present invention. As preferred examples of the thickener, there can be mentioned methyl cellulose, hydroxypropylmethyl cellulose, hydroxyethyl cellulose, carboxymethyl cellulose, sodium alginate, polyvinyl alcohol, sodium polyacrylate and karaya gum. The thickener is preferably used in an an amount of 2 to 12 parts by weight per 100 parts by weight of solids of the SBR latex.

Furthermore, other additives such as an antioxidant and a hydrogen ion adjusting agent may optionally be incorporated into the sealing compound of the present invention according to known recipes.

In accordance with one preferred embodiment of the present invention, an alkali metal carbonate or an alkali metal salt of a phosphorus oxyacid is incorporated as a particle size-adjusting agent into the aqueous SBR latex.

An electrolyte such as sodium chloride is inevitably contained in an aqueous latex of SBR for adjusting the particle size. When the particle size of SBR particles in the aqueous latex is too small, various disadvantages as described hereinbefore are brought about. Accordingly, it is necessary that an electrolyte should be incorporated as a particle size-adjusting agent for maintaining a particle size of SBR particles beyond a certain level.

The important feature of this preferred embodiment of the present invention is that an alkali metal carbonate or an alkali metal salt of a phosphorus oxyacid is selected as the particle size-adjusting agent from various electrolytes and a composition formed by adding this alkali metal salt in an amount of 0.3 to 2.0 parts by weight per 100 parts by weight of solids of the SBR latex is used as a sealing compound for cans. As is shown in Example 2 given hereinafter, when a sealing compound comprising an SBR latex and sodium chloride or sodium sulfate as the electrolyte is coated on a surface-treated steel plate in which a steel substrate is scratched, rusting is caused in the scratched portion with the lapse of time and this rusting is conspicuously accelerated under high temperature and high humidity conditions. In contrast, when a sealing compound comprising an SBR latex and sodium bicarbonate, sodium carbonate or sodium phosphate as the electrolyte according to the preferred embodiment of the present invention is similarly coated on a scratched surface-treated steel plate, rusting is not caused for a long time even under high temperature and high humidity conditions.

Rusting, control of which is aimed in the present invention, takes place when a sealing compound applied to a can end member is allowed to stand in air in the dry state, and this rusting inherently occurs when an SBR latex is formed into a sealing compound by incorporation of other auxiliary components. In other words, when an SBR latex per se is dried and, if necessary, crosslinked to form an elastomer, corrosion of a metal is negligible irrespectively of the kind of the electrolyte. Accordingly, sodium chloride has been used as the electrolyte in many cases. In contrast, the sealing compound of the present invention comprises an emulsifier or a dispersant for improving the dispersion stability of the SBR particles or tackifier in the presence of a large amount of a filler and a thickener for improving the adaptability to the lining operation, and because of the presence of these moisture-absorbing components, the sealing compound of the present invention is very sensitive to the humidity even after drying and corrosion by the residual electrolyte is significant. It has been found that when an alkali metal carbonate or an alkali metal salt of a phosphorus oxyacid is used as a particle size-adjusting agent for SBR latex particles according to the preferred embodiment of the present invention, the corrosive action of the sealing compound can be prominently controlled even in the presence of moisture-absorbing components in the sealing compound without impairing the inherent particle size-adjusting action of the alkali metal salt.

As the alkali metal carbonate to be incorporated as the particle size-adjusting agent in this preferred embodiment of the present invention, there can be mentioned sodium carbonate, sodium bicarbonate and potassium carbonate, and as the alkali metal salt of the phosphorus oxyacid, there can be mentioned sodium phosphate, sodium pyrophosphate, sodium tripolyphosphate, sodium phosphite and potassium phosphate. Since the SBR latex-based sealing compound is sensitive to the humidity to some extent, in order to attain the objects of the present invention, it is especially preferred that an alkali metal carbonate or bicarbonate is used as the particle size-adjusting agent.

The amount of the alkali metal carbonate or the alkali metal salt of the phosphorus oxyacid to be incorporated in the SBR latex is 0.3 to 2.0 parts by weight, preferably 0.4 to 1.2 parts by weight, per 100 parts by weight of solids of the SBR latex, though this amount is changed to some extent according to the particle size of the SBR particles. When the amount of the particle size-adjusting agent is too little and below the above range, no satisfactory particle size-adjusting effect can be obtained, and if the amount of the particle size-adjusting agent is too much and beyond the above range, the SBR latex-based sealing compound becomes too sensitive to the humidity and the intended objects of the present invention cannot satisfactorily be attained.

The SBR latex that is used in this preferred embodiment of the present invention can be obtained by emulsion-polymerizing styrene and butadiene in an aqueous medium containing the above-mentioned alkali metal carbonate or alkali metal salt of the phosphorus oxyacid in the presence of an emulsifier or a dispersant such as mentioned above. Adjustment of the particle size can be accomplished by increasing or decreasing the amount of the alkali metal carbonate or alkali metal salt of the phosphorus oxyacid. For example, if the amount of such alkali metal salt is increased, the particle size can be increased.

The present invention will now be described in detail with reference of the following Examples that by no means limit the scope of the present invention.

Example 1

Composition of Sealing Compound:

| Ingredient | Parts by Weight |
|---|---|
| Rubber (SBR) | 100.0 |
| Filler (clay and titanium dioxide) | 100.00 |
| Tackifier (rosin type resin) | 80.0 |
| Thickener (methyl cellulose and karaya gum) | 5.0 |
| Emulsifier or dispersant (rosin acid soap and fatty acid soap) | 4.5 |
| Antioxidant | 1.0 |
| Water | 435.0 |
| Solid content | 40.0% by weight |
| pH Value | 10.0 |

Seven sealing compounds A through G having the above composition but being different in the particle size of rubber particles were prepared and were tested according to the JIS latex mechanical stability test method, that is, the synthetic rubber NBR latex mechanical stability test method 4.6 according to JIS K 6392—1976.

More specifically, 100 g of a sample was collected at normal temperature and stirred at 1000 rpm under a load of 10 Kg for 1 hour. The weight of coagulated agglomerates was measured and the mechanical stability was evaluated based on the measured weight.

The obtained results are shown in Table 1.

TABLE 1

Results of JIS Mechanical Stability Test of Sealing Compounds

| Sealing Compound | Particle Size (Å) (nm) of Rubber Particles | Weight (mg) of Coagulated Agglomerates |
|---|---|---|
| A | 1200 (120) | 29 |
| B | 1400 (140) | 15 |
| C | 1600 (160) | 10 |
| D | 1800 (180) | 3.5 |
| E | 2300 (230) | 1.7 |
| F | 2800 (280) | 2.0 |
| G | 3000 (300) | 2.5 |

From the results shown in Table 1, it will readily be understood that if the particle size of the rubber particles is at least 1600 Å (160 nm), especially at least 1800 Å (180 nm), the amount of coagulated agglomerates is drastically reduced.

Then, the foregoing sealing compounds were examined with respect to the temperature dependency of the viscosity according to the following procedures.

More specifically, 200 ml of a sample was charged in a beaker and the viscosity (unit: cp (mPas)) was measured by a Brookfield viscometer provided with a rotor #4 rotated at 20 rpm.

The obtained results are shown in Table 2.

TABLE 2

Temperature Dependency of Viscosity (cp (mPas))

| Sealing Compound | Measurement Temperature (°C) | | | | | | |
|---|---|---|---|---|---|---|---|
| | 5 | 10 | 15 | 20 | 25 | 30 | 40 |
| A | 4500 | 4300 | 4600 | 5200 | 5900 | 6800 | 10800 |
| B | 4300 | 4100 | 4300 | 4700 | 5300 | 6100 | 8700 |
| C | 4000 | 3900 | 4000 | 4400 | 4900 | 5400 | 7400 |
| D | 3800 | 3600 | 3800 | 4000 | 4400 | 5000 | 6400 |
| E | 3500 | 3400 | 3500 | 3800 | 4100 | 4500 | 5500 |
| F | 3200 | 3000 | 3100 | 3400 | 3600 | 4000 | 5000 |
| G | 3200 | 3100 | 3100 | 3300 | 3500 | 3900 | 4800 |

Furthermore, the foregoing sealing compounds were tested with respect to the adaptability to the actual lining operation. The obtained results are shown in Table 3.

TABLE 3

| Sealing Compound | Particle Size (Å) (nm) of Rubber Particles | Low Speed Lining Operation (125 strokes per minute) | High Speed Lining Operation (250 strokes per minute) |
|---|---|---|---|
| A | 1200 (120) | F | VP |
| B | 1400 (140) | F | P |
| C | 1600 (160) | G | F |
| D | 1800 (180) | G | G |
| E | 2300 (230) | G | G |
| F | 2800 (280) | G | G |
| G | 3000 (300) | G | G |

The symbols in Table 3 have the following meanings.
VP: 3 to 10 hours' continuous lining operation was possible
P: 14 to 28 hours' continuous lining operation was possible
F: 49 to 70 hours' continuous lining operation was possible
G: 100 to 200 hours' continuous lining operation was possible

Example 2

Composition of Sealing Compound:

| Ingredient | Parts by weight |
|---|---|
| SBR Latex (containing 1.0 part by weight of particle size-adjusting agent per 100 parts by weight of rubber solids) | 100.0 |
| Filler (clay and titanium dioxide) | 100.0 |
| Tackifier (rosin type resin) | 80.0 |
| Thickener (methyl cellulose and karaya gum) | 5.0 |
| Emulsifier or dispersant (rosin acid soap and fatty acid soap) | 4.5 |
| Antioxidant | 1.0 |
| Water | 435.0 |
| Solid content | 40.0% by weight |
| pH Value | 10.0 |

Sealing compounds A through F having the above-mentioned composition, containing 1.0 part by weight of the particle size-adjusting agent per 100 parts by weight of the rubber solids and being different in the kind of the particle size-adjusting agent were prepared, and they were tested with respect to the rusting property to the iron surface according to the following accelerated rusting test method.

An epoxy-phenolic lacquer was coated on a commercially available, chemically treated steel plate (Hi-Top supplied by Toyo Kohan Kabushiki Kaisha and having a thickness of 0.22 mm) so that the thickness of the coating after baking was 50 $\mu$m, and the resulting coating was baked under predetermined conditions. Then, scratches reaching the iron surface were formed on the coating by using a shark knife, and a sample of the sealing compound was coated on the scratches so that a compound film having a thickness of 15 to 30 $\mu$m was obtained. Then, the coated steel plate was dried at 90°C for 10 minutes to obtain a test specimen.

The test specimen was allowed to stand under predetermined temperature and humidity conditions, and it was checked whether or not rusting was caused in the scratches. The obtained results are shown in Table 4, from which it will be readily understood that sodium bicarbonate, sodium carbonate and sodium phosphate have a good effect of rusting prevention.

Incidentally, in respect to each sealing compound, 10 specimens were prepared and the number of the specimens where rusting was observed is shown in Table 4.

TABLE 4

| Sealing Compound | Particle Size-Adjusting Agent | Storage Conditions: Temperature of 20°C and Relative Humidity of 75% — Storage Period | | | Temperature of 37°C and Relative Humidity of 83% — Storage Period | | |
|---|---|---|---|---|---|---|---|
| | | 5 days | 15 days | 30 days | 5 days | 15 days | 30 days |
| A | sodium chloride | 0 | 7 | 10 | 10 | 10 | 10 |
| B | potassium chloride | 0 | 6 | 10 | 10 | 10 | 10 |
| C | sodium sulfate | 0 | 7 | 10 | 10 | 10 | 10 |
| D | sodium bicarbonate | 0 | 0 | 0 | 0 | 0 | 0 |
| E | sodium carbonate | 0 | 0 | 0 | 0 | 0 | 0 |
| F | sodium phosphate | 0 | 0 | 0 | 0 | 0 | 0 |

## Claims

1. A sealing compound for can ends excellent in the adaptability to the lining operation, which comprises an aqueous latex of a styrene-butadiene rubber, a tackifier and a fillter, wherein said latex contains styrene-butadiene rubber particles having a number average particle size of from 1600 to 3000 Å (160—300 nm), which are stabilized by an emulsifier or a dispersant.

2. A sealing compound as set forth in claim 1, wherein the number average particle size of the styrene-butadiene rubber particles is in the range of from 1800 to 2800 Å (180—280 nm).

3. A sealing compound as set forth in claim 1, wherein the styrene-butadiene rubber contains styrene and butadiene at a weight ratio of from 28/72 to 55/45.

4. A sealing compound as set forth in claim 1 or 3, wherein said latex comprises styrene-butadiene rubber particles obtained by emulsion-polymerizing styrene and butadiene at a temperature of 35 to 70°C.

5. A sealing compound as set forth in claim 1, wherein said latex contains the styrene-butadiene rubber particles at a solid concentration of 30 to 90% by weight.

6. A sealing compound as set forth in claim 1, wherein said latex has a pH value of from 9.5 to 10.5.

7. A sealing compound as set forth in claim 1, which further comprises a thickener composed of a water-soluble polymer in an amount of 2 to 12 parts by weight per 100 parts by weight of solids of the styrene-butadiene rubber.

8. A sealing compound as set forth in claim 1, which comprises a tackifier in an amount of 5 to 200 parts by weight, a filler in an amount of 30 to 200 parts by weight and an emulsifier or a dispersant in an amount of 3.5 to 9.5 parts by weight, per 100 parts by weight of solids of the styrene-butadiene rubber.

9. A sealing compound as set for th in claim 1, wherein the aqueous latex of the styrene-butadiene rubber contains as a particle size-adjusting agent an alkali metal carbonate or an alkali metal salt of a phosphorus oxyacid in an amount of 0.3 to 2.0 parts by weight per 100 parts by weight of solids of the styrene-butadiene rubber.

10. A sealing compound as set forth in claim 9, wherein the particle size-adjusting agent is sodium carbonate, sodium bicarbonate or sodium phosphate.

## Patentansprüche

1. Verschliesszusammensetzung für Kannenende, die beim Futtern sehr geeignet ist und die einen wässrigen Latex eines Styrol-Butadienkautschuks, einen Klebrigmacher und einen Füllstoff aufweist, wobei der genannte Latex Partikeln von Styrol-Butadienkautschuk enthält, die eine nummerdurchschnittliche Partikelgrösse von 1600 bis 3000 Å (160—300 nm) haben, wobei die Partikeln durch einen Emulgator oder ein Verbreitungsmittel stabilisiert sind.

2. Verschliesszusammensetzung nach Anspruch 1, worin die nummerdurchschnittliche Grösse der Partikeln von Styrol-Butadienkautschuk im Bereich 1800 bis 2800 Å (180—280 nm) ist.

3. Verschliesszusammensetzung nach Anspruch 1, worin der Styrol-Butadienkautschuk Styrol und Butadien in einem Gewichtsverhältnis von 28/72 bis 55/45 enthält.

4. Verschliesszusammensetzung nach Anspruch 1, worin der genannte Latex Partikeln von Styrol-Butadienkautschuk enthält, die durch Emulsionpolymerisieren von Styrol und Butadien erhalten werden.

5. Verschliesszusammensetzung nach Anspruch 1, worin der genannte Latex die Partikeln von Styrol-Butadienkautschuk bei einer festen Konzentration von 30 bis 90 Gew. % enthält.

6. Verschliesszusammensetzung nach Anspruch 1, worin der genannte Latex einen pH-Wert von 9,5 bis 10,5 hat.

7. Verschliesszusammensetzung nach Anspruch 1, die auch einen Verdicker enthält, der aus einem wasserlöslichen Polymer besteht, der anwesend in einem Betrag von 2 bis 12 Gewichtsteile je 100 Gewichtsteile der Feststoffe des Styrol-Butadienkautschuks ist.

8. Verschliesszusammensetzung nach Anspruch 1, mit einem Klebrigmacher in einem Betrag von 5 bis 200 Gewichtsteile, einem Fullstoff in einem Betrag von 30 bis 2000 Gewichtsteile, und einem Emulgator oder Verbreit-ungsmittel in einem Betrag von 3,5 bis 9,5 Gewichtsteile je 100 Gewichtsteile der Feststoffe des Styrol-Butadienkautschuks.

9. Verschliesszusammensetzung nach Anspruch 1, worin der wässrige Latex des Styrol-Butadienkautschuks ein Mittel zur Reglung der Partikelgrösse aufweist, das aus einem alkalischen Metallkarbonat oder einem alkalischen Metallsalz einer Phosphoroxysaüre in einem Betrag von 0,5 bis 2,0 Gewichtsteile je 100 Gewichtsteile der Feststoffe des Styrol-Butadienkautschuks besteht.

10. Verschliesszusammensetzung nach Anspruch 9, worin das Mittel zur Reglung der Partikelgrösse Natriumkarbonat, Natriumbikarbonat oder Natriumphosphat ist.

**Revendications**

1. Composition pour le scellement de fermetures d'extrémités de boîtes métalliques qui s'adapte excellement à l'opération de doublage et qui comprend un latex aqueux d'un caoutchouc styrène-butadiène, ainsi qu'un agent poisseux et un agent remplisseur, ledit latex comprenant des particules de caoutchouc styrène-butadiène qui ont une dimension particulaire numérique moyenne dans la gamme de 1600 à 3000 Å (160—300 nm) et qui sont stabilisées par un emulsifiant ou un agent dispersif.

2. Composition de scellement selon la revendication 1, dont la dimension particulaire numèrique moyenne des particules de caoutchouc styrène-butadiène est dans la gamme de 1800 à 2800 Å (180—280 nm).

3. Composition de scellement selon la revendication 1, dont le caoutchouc styrène-butadiène a une teneur en styrène et une teneur en butadiène en une proportion pondérale dans la gamme de 28/72 à 55/45.

4. Composition de scellement selon la revendication 1 ou 2, dont ledit latex comprend des particules de caoutchouc styrène-butadiène obtenues par la polymérisation emulsifiante du styrène et du butadiène à une température de 35 à 70°C.

5. Composition de scellement selon la revendication 1, dont ledit latex comprend des particules de caoutchouc styrène-butadiène à une concentration solide de 30 à 90 parties en poids.

6. Composition de scellement selon la revendication 1, dont ledit latex à un pH dans la gamme de 9,5 à 10,5.

7. Composition de scellement selon la revendication 1, qui comprend en outre un épaississant qui consiste en un polymère soluble en eau qui est présente en une quantite de 2 à 12 parties en poids par 100 parties par poids des solides du caoutchouc styrène butadiène.

8. Composition de scellement selon la revendition 1, qui comprend un agent poisseux en une quantité de 5 à 200 parties en poids, un agent remplisseur en une quantité de 30 à 200 parties par poids, et un agent émulsifiant ou dispersif en une quantité de 3,5 à 9,5 parties par poids par 100 parties par poids, des solides du caoutchouc styrène-butadiène.

9. Composition de scellement selon la revendication 1, dont le latex aqueux du caoutchouc styrène-butadiène comprend, comme agent ajusteur de dimension particulaire, un carbonate d'un alcalin ou un sel d'un alcalin d'un oxyacide de phosphore en une quantité de 0,5 à 2,0 parties en poids par 100 parties par poids des solides du caoutchouc styrène-butadiène.

10. Composition de scellement selon la revendication 9, dont l'agent ajusteur de dimension particulaire est le carbonate de soude, le bicarbonate de soude ou le phosphate de soude.

Fig. 1

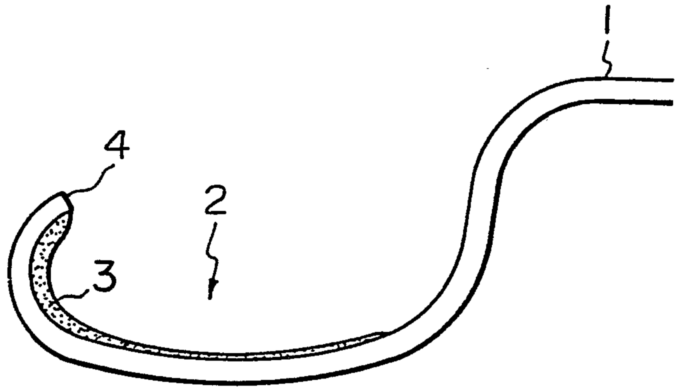


Fig. 2

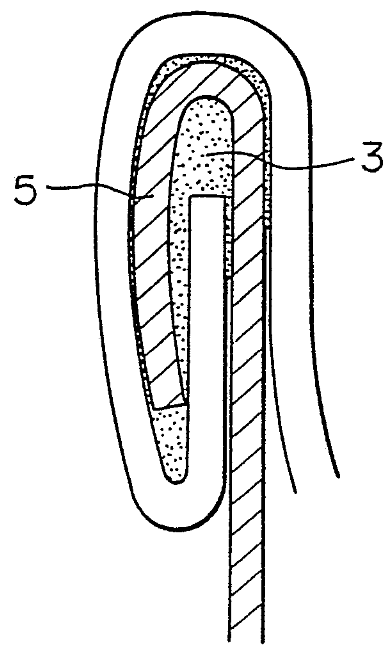

*Fig. 3*

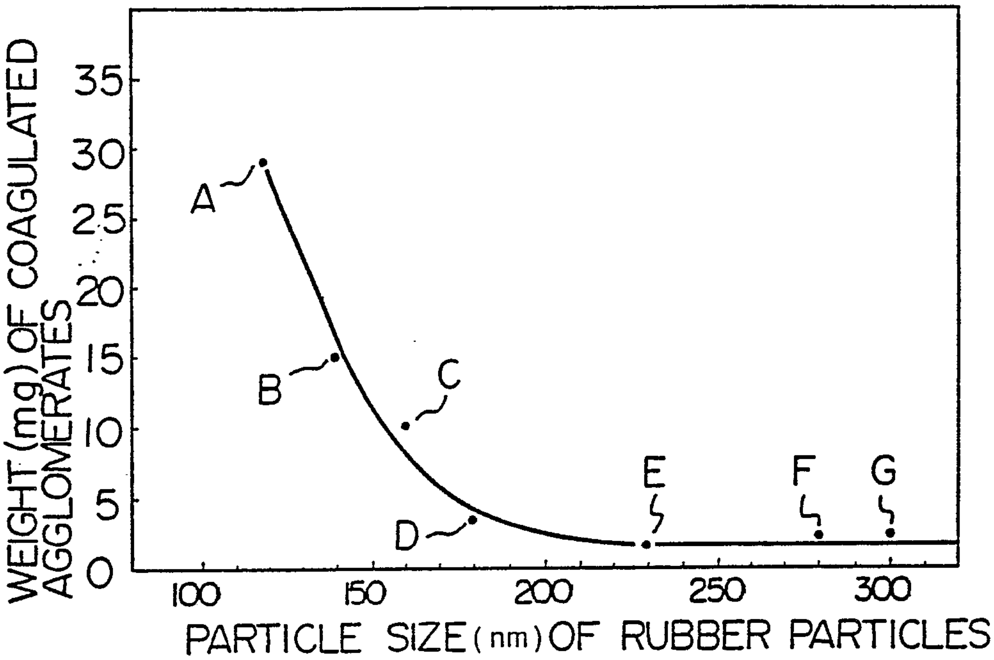
WEIGHT (mg) OF COAGULATED AGGLOMERATES
35
30
25
20
15
10
5
0
A
B
C
D
E
F
G
100
150
200
250
300
PARTICLE SIZE (nm) OF RUBBER PARTICLES

*Fig. 4*

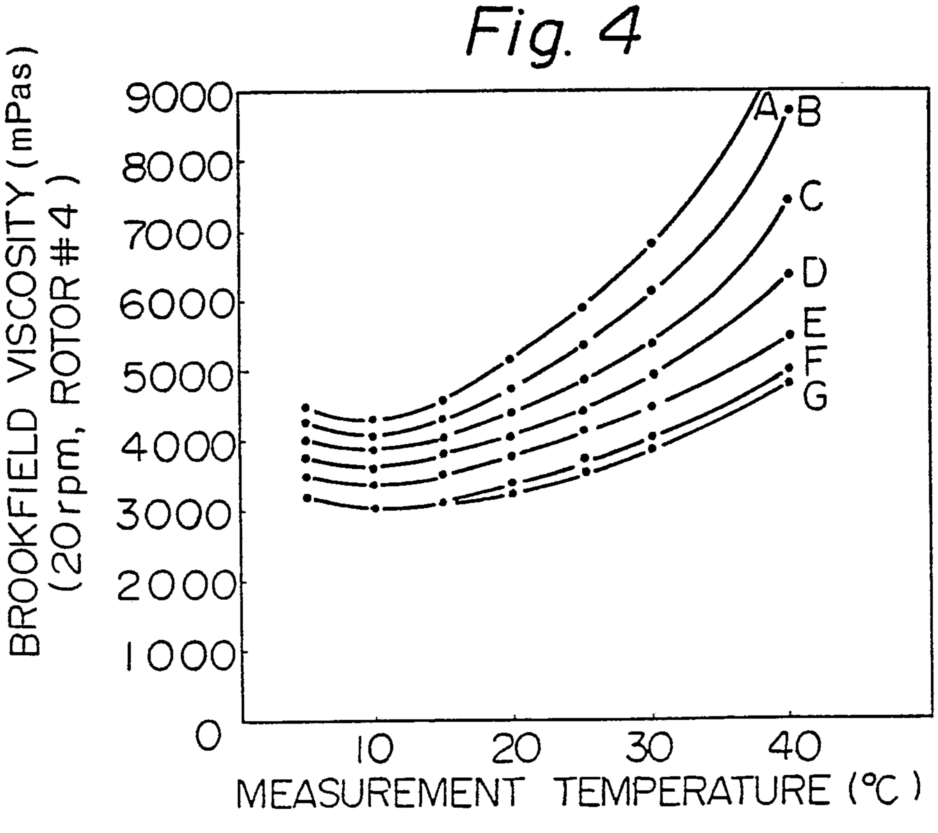
BROOKFIELD VISCOSITY (mPas) (20rpm, ROTOR #4)
9000
8000
7000
6000
5000
4000
3000
2000
1000
0
A
B
C
D
E
F
G
10
20
30
40
MEASUREMENT TEMPERATURE (°C)